Europäisches Patentamt

European Patent Office

Office européen des brevets

(11) Numéro de publication: **0 408 814 A1**

# DEMANDE DE BREVET EUROPEEN

(21) Numéro de dépôt: 89402037.9

(22) Date de dépôt: 18.07.89

(51) Int. Cl.⁵: **A47J 37/04**, A47J 37/06

(43) Date de publication de la demande:
23.01.91 Bulletin 91/04

(84) Etats contractants désignés:
BE CH DE ES GB IT LI NL SE

(71) Demandeur: **Guilmault, Guy-Simon**
**8, rue Foch Oncy-sur-Ecole**
**F-91490 Milly-la-Forêt(FR)**

(72) Inventeur: **Guilmault, Guy-Simon**
**8, rue Foch Oncy-sur-Ecole**
**F-91490 Milly-la-Forêt(FR)**

(74) Mandataire: **Flavenot, Bernard**
**Société ABRITT 17, rue du Docteur Charcot**
**La Norville**
**F-91290 Arpajon(FR)**

(54) **Dispositif pour la réalisation de plats du type omelette ou analogue.**

(57) La présente invention concerne les dispositifs de réalisation de plats en parts individuelles.

Le dispositif selon l'invention se caractérise essentiellement par le fait qu'il comporte une embase (1) définissant un chemin de déplacement (2) suivant une surface plane (9), des moyens de chauffage (5) du chemin de déplacement, au moins une enveloppe (11) délimitée par une ouverture de fond (13) dont les bords (17) sont définis dans un plan et par une ouverture d'entrée (14), des moyens commandables pour translater l'enveloppe le long et sur le chemin de déplacement entre au moins une première et une deuxième positions, des moyens pour faire osciller (16) l'enveloppe autour d'une position donnée et la maintenir de façon que l'ouverture de fond reste au contact du chemin de déplacement, des moyens pour délivrer de façon commandable (60,66) dans l'enveloppe une dose d'un produit de composition de base du plat, quand cette enveloppe est située à la première position, et des moyens (50) pour récupérer la dose quand l'enveloppe a parcouru le chemin de déplacement et qu'elle est arrivée à la seconde position.

Application, notamment, à la réalisation d'omelettes ou analogues en parts individuelles.

fig. 2

# DISPOSITIF POUR LA REALISATION DE PLATS DU TYPE OMELETTE OU ANALOGUE

La présente invention concerne les dispositifs de réalisation de plats du type "omelette" ou analogue, plus particulièrement les dispositifs qui permettent de réaliser, par exemple, des omelettes en parts individuelles et ce, pour une production en grande quantité comme celle qui est nécessaire dans des restaurants de collectivités.

La vie moderne oblige un grand nombre de personnes à se restaurer sur leur lieu de travail. Aussi, pour répondre à cette nécessité, a-t-il été prévu des restaurants de grande capacité agencés de telle façon que les consommateurs puissent se servir eux-mêmes les plats qu'ils ont choisis. Dans ce genre de restauration, on conçoit qu'il soit impératif de préparer un même plat en parts individuelles, de façon répétitive et en grande quantité. Il existe de nombreux plats relativement faciles à être présentés en parts individuelles, mais beaucoup d'entre eux ne peuvent être facilement préparés sous forme de quantités importantes de parts individuelles. C'est le cas, par exemple, des omelettes qui sont pourtant très appréciées d'une grande majorité de personnes et ce, dans beaucoup de pays du monde.

En effet, il est très difficile d'obtenir de façon manuelle une quantité importante d'omelettes en parts individuelles et présentant une qualité homogène. De plus, le coût de revient d'une telle méthode est prohibitif et empêche une telle présentation dans des restaurants du type "pour collectivité". On peut évidemment concevoir que de telles omelettes soient obtenues par division en parts individuelles d'une grande omelette unitaire. Mais dans ce cas, si la quantité de chaque part peut être éventuellement la même, sa qualité peut être variable, certaines parties pouvant être trop cuites, d'autres pas assez.

Pour tenter de résoudre les problèmes de la production d'une grande quantité de parts individuelles d'omelette présentant la qualité requise, il a été proposé de réaliser des dispositifs permettant de confectionner des parts d'omelette de façon automatique. En fait, les résultats constatés obtenus par ces dispositifs n'ont jusqu'à présent jamais donné réellement entière satisfaction, notamment aux consommateurs, par le fait que les plats obtenus n'avaient pas la qualité requise souhaitée qui est le moelleux que l'on peut obtenir lorsqu'une omellette est faite à la main.

La présente invention a pour but de réaliser un dispositif qui permette de réaliser des parts individuelles de plats du type "omelette" ou analogue présentant la qualité souhaitée par les consommateurs, et qui conserve les avantages des dispositifs de production dite "en automatique" qui sont essentiellement la rapidité, la répétitivité et le coût de revient relativement faible.

Plus précisément, la présente invention a pour objet un dispositif pour réaliser des plats du type "omelette" ou analogue, caractérisé par le fait qu'il comporte :
une embase définissant un chemin de déplacement suivant une surface plane,
des moyens de chauffage dudit chemin de déplacement,
au moins une enveloppe délimitée par une ouverture inférieure de fond dont les bords sont définis dans un plan et par une ouverture d'entrée supérieure,
des moyens commandables pour translater ladite enveloppe le long et sur ledit chemin de déplacement entre au moins une première et une deuxième positions,
des moyens pour faire osciller ladite enveloppe autour d'une position donnée et la maintenir de façon que ladite ouverture de fond reste au contact dudit chemin de déplacement,
des moyens pour délivrer de façon commandable une dose d'un produit de composition de base dudit plat dans ladite enveloppe par ladite entrée, quand cette dite enveloppe est située à ladite première position, et
des moyens pour récupérer ladite dose quand ladite enveloppe a parcouru ledit chemin de déplacement entre lesdites première et seconde positions et qu'elle est arrivée à ladite seconde position.

D'autres caractéristiques et avantages de la présente invention apparaîtront au cours de la description suivante donnée en regard des dessins annexés à titre illustratif mais nullement limitatif dans lesquels :

La figure 1 est une vue de dessus d'un mode de réalisation d'un dispositif permettant de réaliser des plats du type "omelette" selon l'invention, et

La figure 2 est une vue en coupe schématisée du mode de réalisation du dispositif selon la figure 1, ladite coupe étant référencée II-II sur cette figure 1.

Les figures représentent un mode de réalisation d'un dispositif permettant de réaliser des plats du type "omelette" en parts individuelles en accord avec les buts stipulés au préambule de la présente description. Ce dispositif comporte une embase 1 définissant un chemin de déplacement 2 qui, dans ce mode de réalisation, est avantageusement circulaire centré en 3. A ce chemin de déplacement 2, sont associés des moyens de chauffage 4 avantageusement constitués par des résistances chauffantes 5 situées sur la face inférieure 6 du chemin de déplacement 2.

Cette embase 1 est généralement disposée sur un pied 7 apte à la positionner sur un sol 8, de façon que la face 6 sur laquelle sont plaquées les résistances chauffantes 5 soit à un niveau inférieur, mais que, par contre, la face 9 du chemin de déplacement 2 opposée à la face 6 soit située à un niveau supérieur. La surface de cette face 9 est de façon préférentielle plane pour présenter les avantages qui seront définis ci-après.

L'embase 1, plus particulièrement le chemin de déplacement 2, est constituée d'une couronne présentant une ouverture centrale 10 et réalisée en un matériau ayant une relativement bonne conductibilité thermique telle que, par exemple, de la fonte d'aluminium ou du fer en plaque d'épaisseur relativement importante.

Le dispositif comporte en outre des enveloppes 11 qui sont, par exemple, constituées par une tôle en matériau métallique du type inoxydable conformée pour former une paroi 12 cylindrique de révolution présentant de ce fait deux ouvertures d'extrémités, respectivement une ouverture inférieure 13 dite "de fond", dont le bord 17 est défini dans un plan, et une ouverture supérieure 14 dite "d'entrée". Le dispositif comporte en outre des moyens commandables 15 pour translater ces enveloppes 11 sur la surface supérieure 9 du chemin de déplacement 2 et le long de celui-ci, entre au moins deux positions.

Dans le mode de réalisation illustré, le dispositif comporte quatre enveloppes réparties à des distances sensiblement égales et associées aux moyens de déplacement en translation 15 de façon qu'elles soient toutes animées d'un mouvement de translation circulaire illustré par les flèches 116 le long du chemin de déplacement 2. Comme celui-ci est de forme circulaire, les enveloppes sont animées d'un mouvement de rotation autour du centre 3 défini ci-dessus et les première et deuxième positions que peuvent prendre ces enveloppes sont donc confondues si elles parcourent un tour complet de ce chemin.

Aux moyens commandables 15 permettant de translater les enveloppes sont associés des moyens 16 permettant de faire osciller chaque enveloppe 11 autour d'une position donnée, tout en maintenant le bord 17 de l'ouverture de fond 13 constamment au contact de la face supérieure 9 du chemin de déplacement 2.

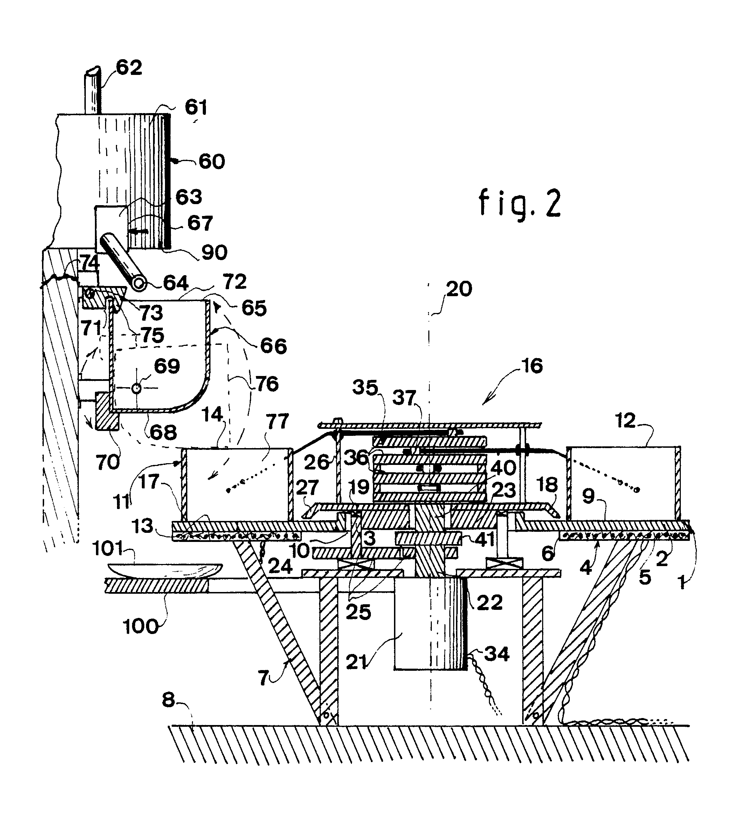

Les figures, et plus particulièrement la figure 2, illustrent un exemple de réalisation des moyens de translation 15 et des moyens d'oscillation 16.

Dans ce mode de réalisation, les moyens de translation comportent un plateau 18 monté rotatif sur, par exemple, des roulements du type à billes 19 autour d'un axe vertical 20 passant par le point central 3 défini ci-dessus. Ces moyens de translation comportent en outre un moteur d'entraînement 21 solidarisé par tout moyen au piètement 7 et dont l'arbre de rotation de sortie 22 est couplé à un engrenage 23 solidaire du plateau 18 par l'intermédiaire d'un réducteur de vitesse 24 à engrenage. Ce type de réducteur est bien connu en lui-même et il a donc été sciemment schématisé sur la figure 2 à l'aide, par exemple, de trois engrenages 25 solidaires de l'arbre de sortie 22 du moteur 21.

Chaque enveloppe 11 est liée à un arbre 26 solidaire du plateau 18. Dans l'exemple de réalisation, comme il y a quatre enveloppes régulièrement réparties autour du point central 3, il y a quatre arbres 26 respectivement disposés aux sommets d'un carré et situés sensiblement sur le bord 27 du plateau 18. Chaque enveloppe est réunie à l'arbre correspondant par une fourche 28 dont les deux dents 29, 30 sont solidarisées par tout moyen 31 à la paroi extérieure 32 de l'enveloppe, tandis que son autre extrémité 33 est constituée par un bras monté rotatif autour de l'arbre de rotation 26, dans le but qui sera explicité ci-après, notamment dans la description des moyens d'oscillation.

Sans entrer dans les détails, lorsque le moteur d'entraînement 21 est alimenté en énergie par son entrée de commande 34 et qu'il entraîne en rotation son arbre de sortie 22, la rotation est transmise au plateau 18 par l'intermédiaire du réducteur de vitesse 24 qui donne à cette rotation une vitesse relativement faible. Les enveloppes 11 sont alors soumises à des tractions transmises par l'intermédiaire des arbres 26 et des deux branches 29, 30 des fourches 28, et sont donc entraînées dans le mouvement de rotation autour du point central 3, pour parcourir le chemin de déplacement 2 en autant de tours qu'il sera nécessaire pour obtenir le résultat voulu, comme il sera explicité ci-après.

Quant aux moyens d'oscillation 16, ils sont essentiellement constitués par un empilement 35 de plaques rotatives 36 au nombre de quatre, chaque plaque rotative comportant un ergot excentré 37 qui est entouré par l'extrémité du bras 33 conformé en fourchette 38 et définissant une fente oblongue 39. Cet empilement 35 de plaques rotatives 36 est solidaire d'un arbre menant 40 couplé avec l'arbre de sortie 22 du moteur 21 par un coupleur mécanique 41 transformant un mouvement de rotation de l'arbre 22 en un mouvement oscillant autour d'une position donnée. Ce type de coupleur mécanique étant aussi connu en lui-même, le coupleur mécanique 41 ne sera pas plus amplement décrit ici et a été schématisé sur le dessin de la figure 2.

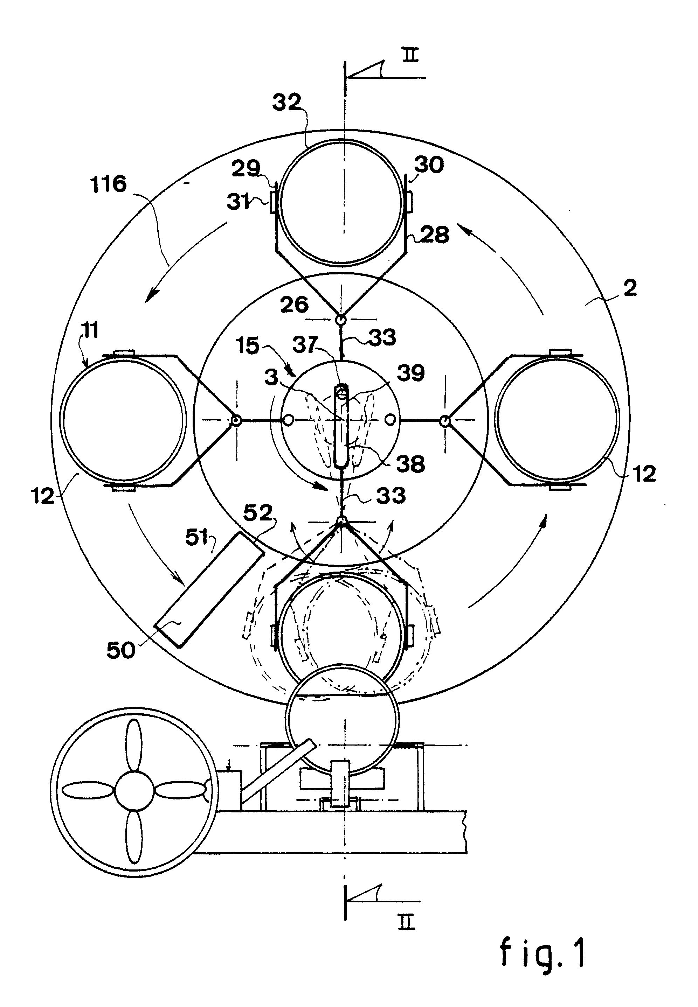

De ce fait, lorsque l'arbre 22 est animé d'un mouvement de rotation, l'arbre 40 est, lui, animé d'un mouvement oscillant permettant de déplacer les ergots 37 de chaque plaque pivotante entre deux positions extrêmes représentées sur la figure 1 en traits interrompus. La fourchette 38 est entraînée dans ce mouvement d'oscillation et donc aussi la fourche 28 montée rotative autour de l'arbre 26, ce qui permet de faire osciller autour d'une position donnée les enveloppes 11, tout en maintenant les bords 17 de leur fond 13 en contact avec la face supérieure 9 du chemin de déplacement 2.

Les rapports du réducteur d'engrenage 24 et du coupleur mécanique 41 qui sont couplés tous les deux à un même moteur seront déterminés de façon que la vitesse de déplacement en oscillations de chaque enveloppe 11 soit nettement supérieure à sa vitesse de déplacement en translation circulaire, de sorte qu'elle subisse périodiquement un mouvement de recul par rapport au mouvement en translation circulaire, comme cela apparaît illustré sur la figure 1 où les deux positions extrêmes d'une enveloppe 11 dans son déplacement en oscillations sont représentées en traits interrompus de part et d'autre de sa position d'équilibre représentée en trait continu. Par ailleurs, la vitesse du déplacement en translation circulaire sera calculée de façon que le temps mis par une enveloppe pour parcourir le chemin de déplacement 2 jusqu'aux moyens de récupération décrits ci-après soit avantageusement égal au temps nécessaire pour la cuisson optimale du plat devant être préparé à l'aide du dispositif.

En effet, le dispositif comporte aussi des moyens de récupération de l'omelette, ou analogue, lorsqu'elle est apte à être consommée. Dans le mode de réalisation illustré, ces moyens sont constitués par une découpe 50 réalisée dans l'embase 1 sur le chemin de déplacement 2, cette découpe ayant une longueur 51 au moins égale sinon nettement supérieure au diamètre de chaque enveloppe de façon que celle-ci puisse passer complètement sur la largeur 52 de la découpe 50, cette largeur étant cependant nettement inférieure au diamètre de l'enveloppe.

Le dispositif comporte en outre des moyens 60 pour délivrer de façon commandable une dose déterminée de produit de composition de base du plat à réaliser, par exemple, des omelettes en parts individuelles. Ces moyens peuvent comporter, tels qu'illustrés sur les figures, une réserve 61 du produit de base, par exemple une préparation pour omelette comportant de façon connue des oeufs battus, des épices, de la crème fraîche ou du lait, etc. Cette réserve 61 comporte éventuellement un batteur 62 permettant au mélange oeufs-ingrédients additionnels qu'elle contient d'être parfaitement constamment homogène et sa partie basse 90 est réunie à une vanne doseuse 63 dont le conduit de sortie 64 est dirigé vers l'entrée 65 d'un godet 66, cette vanne doseuse comportant une entrée de commande 67 permettant de commander son ouverture pendant un temps déterminé adapté à la quantité de mélange à délivrer.

Dans ce mode de réalisation, le godet doseur 66 est constitué par un récipient lesté 68 monté pivotant autour d'un axe horizontal 69 situé à l'intersection d'un plan vertical situé entre celui passant par son centre de gravité "à vide" et celui passant par son centre de gravité "à plein" lorsqu'il contient la dose déterminée de produit, et d'un plan horizontal situé à un niveau inférieur à celui passant par le centre de gravité "à plein".

Le récipient 68 est avantageusement lesté d'un contrepoids 70 situé de façon que, lorsque le récipient est vide, celui-ci se redresse automatiquement et vienne se plaquer contre une butée 71 permettant de définir sa position verticale dans laquelle son ouverture d'entrée 72 est située en dessous de l'ouverture du conduit 64 par lequel s'écoule la préparation de base pour le plat à réaliser. La butée 71 peut être constituée par un cliquet commandable 73 qui permet, sur commande, par exemple du type électromagnétique 74 schématiquement représenté, de maintenir le récipient 68 dans sa position verticale de réception telle qu'illustrée, et de dégager le bord 75 du récipient lorsque celui-ci a reçu la dose déterminée de préparation.

A un tel dispositif sont avantageusement associés des moyens permettant de donner l'ensemble des ordres pour synchroniser les opérations décrites ci-dessus et récupérer les omelettes ainsi produites, par exemple sur un tapis roulant 100 situé sous l'embase 1 et sur lequel seront disposées les assiettes 101 dans lesquelles pourront être déposées les omelettes individuelles, et même pour commander des systèmes annexes permettant, lors de la cuisson des omelettes, d'ajouter des ingrédients ou différentes garnitures.

Le dispositif tel que décrit ci-dessus fonctionne de la façon suivante :

Le moteur 24 est commandé et entraîne les enveloppes en translation circulaire 116 le long du chemin de déplacement 2 tout en les soumettant à des mouvements d'oscillation relativement rapides par rapport à leur vitesse de translation. Le récipient 68 est supposé contenir une première dose d'oeufs battus. Quand une enveloppe 11 passe en dessous de celui-ci, un ordre est envoyé pour dégager le cliquet 73, par exemple au moyen d'un interrupteur à galet couplé directement ou indirectement au plateau 18. Le récipient 68 pivote alors sur son axe horizontal 69 sous l'effet du poids de la dose de produit qu'il contient et prend la position illustrée en traits interrompus sur la figure 2. Lorsque la dose de produit s'est déversée à l'intérieur 77 de l'enveloppe 11, le contrepoids 70 fait revenir automatiquement le récipient 68 dans sa position verticale définie précédemment, jusqu'à ce que son bord 75 s'engage dans le cliquet 73. Le récipient est ainsi redevenu apte à recevoir une nouvelle dose de produit libérée par la vanne doseuse 63.

L'enveloppe 11 continue sa translation circulaire et ses oscillations rapides, le bord 17 de son fond 13 restant plaqué sur la face 9 de l'embase 1. Comme cette embase est chauffée par les résistances chauffantes, les oeufs battus contenus dans le volume 77 de l'enveloppe 11 commencent à cuire tout en étant soumis à un battage produit par les oscillations rapides de l'enveloppe. Cette dose est ainsi translatée tout le long du chemin de déplacement jusqu'à son arrivée au niveau de la découpe 50.

Le mouvement de battage permet de donner à l'omelette tout le moelleux demandé par les consommateurs en même temps qu'une consistance suffisante pour qu'elle s'agglomère sur une épaisseur sensiblement égale ou légèrement inférieure à la largeur 52 de la découpe 50. Par ailleurs, comme le diamètre de l'enveloppe, et donc de l'omelette, est inférieur à la longueur 51 de la découpe, l'omelette arrivant au niveau de celle-ci peut y tomber pour être reçue dans une assiette 101 translatée en synchronisme par le tapis roulant 100.

Il est concevable que ces opérations se répètent à l'identique pour chaque enveloppe 11 faisant partie du dispositif. Avec le mode de réalisation illustré, il est donc possible, à chaque tour du plateau 18, de pouvoir entreprendre la réalisation de quatre omelettes individuelles. Le dispositif permet donc la cuisson et la fourniture automatiques d'une grande quantité d'omelettes individuelles présentant la qualité de moelleux généralement obtenue quand celles-ci sont faites manuellement et fort prisée des consommateurs.

## Revendications

1. Dispositif pour réaliser des plats du type "omelette" ou analogue, caractérisé par le fait qu'il comporte :
une embase (1) définissant un chemin de déplacement (2) suivant une surface plane (9),
des moyens de chauffage dudit chemin de déplacement,
au moins une enveloppe (11) délimitée par une ouverture inférieure de fond (13) dont les bords (17) sont définis dans un plan et par une ouverture d'entrée supérieure (14),
des moyens commandables pour translater (15) ladite enveloppe le long et sur ledit chemin de déplacement entre au moins une première et une deuxième positions,
des moyens pour faire osciller (16) ladite enveloppe autour d'une position donnée et la maintenir de façon que ladite ouverture de fond reste au contact dudit chemin de déplacement,
des moyens pour délivrer de façon commandable (60) une dose d'un produit de composition de base dudit plat dans ladite enveloppe par ladite entrée, quand cette dite enveloppe est située à ladite première position, et
des moyens pour récupérer ladite dose quand ladite enveloppe a parcouru ledit chemin de déplacement entre lesdites première et seconde positions et qu'elle est arrivée à ladite seconde position.

2. Dispositif selon la revendication 1, caractérisé par le fait que les moyens commandables (60) pour délivrer une dose déterminée de produit comportent une réserve (61) du produit de base, une vanne doseuse (63) comprenant un conduit de sortie (64), un godet (66), et une butée (71) définissant le positionnement dudit godet apte à recevoir ladite dose, une sortie de ladite réserve étant reliée à l'entrée de la vanne doseuse dont le conduit de sortie est dirigé vers l'entrée (65) du godet, la vanne doseuse comportant une entrée de commande (67) permettant de commander son ouverture pendant un temps déterminé adapté à ladite dose.

3. Dispositif selon la revendication 2, caractérisé par le fait que ledit godet (66) est constitué par un récipient lesté (68) monté pivotant autour d'un axe (69) situé à l'intersection d'un plan vertical situé entre celui passant par son centre de gravité "à vide" et celui passant par son centre de gravité "à plein" lorsqu'il contient la dose déterminée de produit, et d'un plan horizontal situé à un niveau inférieur à celui passant par le centre de gravité "à plein".

4. Dispositif selon l'une des revendications 1 à 3, caractérisé par le fait que ledit chemin de déplacement (2) a la forme d'une couronne circulaire.

5. Dispositif selon la revendication 4, caractérisé par le fait que les moyens de déplacement en translation (15) de ladite enveloppe comportent un plateau (18) monté rotatif autour d'un axe vertical (20) passant par le point central (3) dudit chemin de déplacement, un moteur d'entraînement (21) dont l'arbre de rotation de sortie (22) est couplé à un engrenage (23) solidaire du plateau (18) par l'intermédiaire d'un réducteur de vitesse (24) à engrenage, un deuxième arbre (26) solidaire dudit plateau, et une fourche (28) pour lier ladite enveloppe audit deuxième arbre.

6. Dispositif selon la revendication 5, caractérisé par le fait que les moyens de déplacement en oscillations (16) de ladite enveloppe (11) sont constitués par un bras (33) solidaire en l'une de ses extrémités de ladite fourche montée rotative autour du deuxième arbre de rotation (26), une plaque rotative (36) comportant un ergot excentré (37) qui est entouré par l'autre extrémité du bras (33) conformé en fourchette (38) définissant une fente oblongue (39), ladit plaque rotative étant solidaire d'un arbre menant (40) couplé avec l'arbre de sortie (22) du moteur (21).

7. Dispositif selon l'une des revendications 1 à 6, caractérisé par le fait que les moyens pour récupérer ladite dose quand ladite enveloppe a parcouru ledit chemin de déplacement entre lesdites première et seconde positions et qu'elle est arrivée à ladite seconde position sont constitués par une découpe (50) réalisée dans l'embase (1) sur le chemin de déplacement (2), cette découpe ayant une longueur (51) et une largeur (52) respectivement supérieure et inférieure à la section de ladite enveloppe (11).

8. Dispositif selon l'une des revendications 1 à 7, caractérisé par le fait que ladite embase (1) est réalisée en un matériau bon conducteur de la chaleur et que les moyens de chauffage dudit chemin de déplacement sont constitués par des résistances chauffantes (5).

9. Dispositif selon l'une des revendications précédentes, caractérisé par le fait que ladite enveloppe (11) est définie par une paroi (12) cylindrique de révolution.

fig.1

fig. 2

# RAPPORT DE RECHERCHE EUROPEENNE

Office européen des brevets

Numero de la demande

EP 89 40 2037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | GB-A-2116025 (MC. DONALDS CORP.) <br> * le document en entier * | 1 | A47J37/04 <br> A47J37/06 |
| A |  | 8, 9 | |
| Y | US-A-2033178 (BRAND) <br> * le document en entier * | 1 | |
| A |  | 2, 4 | |
| A | DE-C-568461 (HOLLAND UND BESSLER) <br> * le document en entier * | 1, 2, 4, 8 | |
| A | FR-A-2158218 (KUEPPERSBUSCH UND SOEHNE AG) | | |
| A | US-A-3340793 (NILSEN) | | |

|  |  |  | DOMAINES TECHNIQUES RECHERCHES (Int. Cl.5 ) |
|---|---|---|---|
|  |  |  | A47J |

Le présent rapport a été établi pour toutes les revendications

| Lieu de la recherche | Date d'achèvement de la recherche | Examinateur |
|---|---|---|
| LA HAYE | 13 MARS 1990 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)